# EUROPEAN PATENT APPLICATION

(11) **EP 3 392 392 A1**
(43) Date of publication of application: **24.10.2018**
(21) Application number: 16874821.8
(22) Date of filing: 14.12.2016
(51) Int. Cl.: D06F 39/08, D06F 39/00

(54) **WATER STORAGE TANK OF WASHING MACHINE AND WASHING MACHINE**

(30) Priority: 14.12.2015 JP 2015243253
(71) Applicant: Qingdao Haier Washing Machine Co., Ltd., Shandong 266101 (CN); Aqua Co., Ltd, Chiyoda-ku Tokyo 100-0005 (JP)
(72) Inventor: HIROSE, Satoshi, Tokyo 100-0005 (JP); MATSUMOTO, Makoto, Tokyo 100-0005 (JP)
(74) Representative: HGF Limited
(86) International application number: PCT/CN2016/109759
(87) International publication number: WO 2017/101764

(57) **Abstract**

A purpose of the present invention is to provide a water storage tank for a washing machine. The water storage tank for the washing machine can maintain a good use feeling, inhibit an occurrence probability of maintenance operation and simultaneously reduce water consumption effectively. The water storage tank (4) for the washing machine in the present invention includes: a tank body (41) configured in a housing (2) of the washing machine (1) and having a water flowing portion (45) which is internally formed into a tubular shape and constitutes a continuous flow path surface (47) and an external surface portion (44) that constitutes a flexible external surface (41a); a water injecting port (42) arranged at one end of the tank body (41) and configured to inject water, as washing drum drainage water, discharged from a washing drum to the tank body (41); and a water outtake port(43) arranged at another end of the tank body (41) and capable of recirculating the water injected into the tank body (41) into the washing drum.

## Description

### TECHNICAL FIELD

The present invention relates to a washing machine and a water storage tank for the washing machine. The washing machine recycles water used once to a washing drum for reuse by using a water storage tank separated from the washing drum, thereby reducing water consumption.

### BACKGROUND

For an ordinary washing machine arranged in an ordinary family, a washing machine that uses bath water by installing a water pump to save the consumption of new water in the family by a user, a washing machine having a water tank in a housing, for storing water, separated from a washing drum and called as a water storage tank, and the like have been proposed. The washing machine having the water storage tank temporarily stores drainage water from the washing drum into the water storage tank, and returns the drainage water from the water storage tank into the washing drum in a necessary washing process to recycle the drainage water, thereby reducing the water consumption (for example, see patent literature 1). Specifically, the water storage tank recorded in the patent literature 1 is generally formed into a roughly box shape arranged at a lower side of the washing drum. In addition, a fixed water storage tank separated from the washing machine and for example, capable of loading the washing machine on an upper surface has been proposed (for example, see patent literature 2).

Moreover, the washing machine recorded in the patent literature 1 is generally controlled in following manner: water injection amount of injected water in the water storage tank ensures that the water storage tank is not full of the water in such a manner that the water storage tank is not damaged even if the water storage tank is expanded since the water in the water storage tank is frozen, and a space is reserved at an upper part.

However, in the washing machine disclosed in the patent literature 1, dirt and other substances are easy to accumulate on an internal surface of the water storage tank formed into a box shape. In addition, as mentioned above, the following tendency exists: when the washing machine controls the water storage tank in such a process that from the water storage tank is not stored water to the water storage tank is full of the water, the dirt and other substances are centrally accumulated into a roughly linear shape in a contact position between a water surface of the stored water and an inner wall surface of the water storage tank. As a result, it is necessary to perform maintenance operation such as washing for the dirt attached to the inner wall surface of the water storage tank; and besides, since the maintenance operation needs a touch with the inner wall surface of the water storage tank, the operation is difficult and complicated.

In addition, in a structure disclosed in above patent literature 2, on a structure separated from the washing machine, with respect to use easiness of the washing machine, especially under a condition that the washing machine is loaded on the upper surface, since a height position of the upper surface of the washing machine is changed, a user may feel difficulty in use. In addition, even for the washing machine recorded in the patent literature 1, on such a structure that the water storage tank formed into a box shape is arranged in the housing, a possibility of enlarging the housing in order to ensure a built-in space is irrefragable.

### Related Technical Literature

Patent Literature
Patent Literature 1: Japanese Laid-Open Patent Publication No. 2011-019963
Patent Literature 2: Japanese Laid-Open Patent Publication No. 2001-218997

### SUMMARY

### Problems to be solved by the invention

A purpose of the present invention is to effectively solve such problems, so as to provide a water storage tank for a washing machine and a washing machine having the water storage tank. The water storage tank for the washing machine can maintain a good use feeling, inhibit an occurrence probability of maintenance operation and simultaneously reduce water consumption effectively.

### Solution for solving the problems

In view of above problems, the present invention adopts the following solutions.

A water storage tank for a washing machine in the present invention includes: a tank body configured in a housing of the washing machine, and having a water flowing portion which is internally formed into a tubular shape and constitutes a continuous flow path surface and an external surface portion that constitutes a flexible external surface; a water injecting port arranged at one end of the tank body and configured to inject washing drum drainage water discharged from a washing drum to the tank body; and a water outtake port arranged at another end of the tank body and capable of recirculating the washing drum drainage water injected into the tank body into the washing drum.

In addition, in the present invention, the external surface portion is formed into a linear shape having flexibility; and the water flowing portion includes the flow path surface arranged on an internal surface of the external surface portion and formed into a tubular shape.

In addition, in the present invention, a profile of the tank body is formed into a roughly plate shape.

In addition, in the present invention, a profile of the tank body is formed into a roughly annular shape in which a mechanism arrangement space is formed at a center of the roughly annular shape.

In addition, in the present invention, a washing machine includes any of the above water storage tank for the washing machine.

### Effects of the invention

According to the present invention, the water flowing portion of the tank body has a tubular and continuous flow path surface, so that the washing drum drainage water from the washing drum, when flowing, rapidly passes through the flow path surface. Therefore, dirt is difficult to accumulate on an internal surface, and besides, the dirt attached to the flow path surface can be washed away through the flow of the washing drum drainage water. As a result, a probability of performing difficult and complicated maintenance operation such as washing of internal dirt and the like can be effectively reduced. In addition, according to the present invention, since the external surface portion of the tank body has flexibility and is deformable, the external surface portion can be properly deformed in the housing of the washing machine, so as to effectively utilize an idle space without interfering with other mechanism components. Thus, it is easier or not necessary to ensure a space used for configuring the tank body in the housing, and a possibility of unnecessarily enlarging the housing can be effectively eliminated.

In addition, according to the present invention in which the external surface portion is formed into a linear shape having flexibility and the water flowing portion includes a flow path surface arranged on an internal surface of the external surface portion and formed into a tubular shape, the profile of the tank body can be properly deformed according to other shapes of an interior of the housing and configuration of mechanism components, so as to more effectively utilize the space in the housing. In addition, when the flow path surface formed into a tubular shape is arranged, the following bad condition can be effectively avoided: when the washing drum drainage water flows into the tank body, the washing drum drainage water is retained in a position in the tank body.

In addition, according to the present invention in which the profile of the tank body is formed into a roughly plate shape, a structure that effectively utilizes a gap formed along the internal surface of the housing can be designed.

In addition, according to the present invention in which the profile of the tank body is formed into a roughly annular shape and a mechanism arrangement space is formed at the center therein, such a structure can be designed that a space around a position can be effectively utilized even if the position is protruded from the mechanism components in the housing.

### BRIEF DESCRIPTION OF DRAWINGS

FIG. 1 is a three-dimensional diagram illustrating an appearance of a washing machine 1 in an embodiment of the present invention;
FIG. 2 is a diagram illustrating a general structure of a washing machine 1 in the same embodiment;
FIG. 3 is a three-dimensional diagram illustrating a structure of a tank 4 in the same embodiment;
FIG. 4 is a three-dimensional diagram illustrating an appearance of a washing machine 1 in a modified example of the same embodiment;

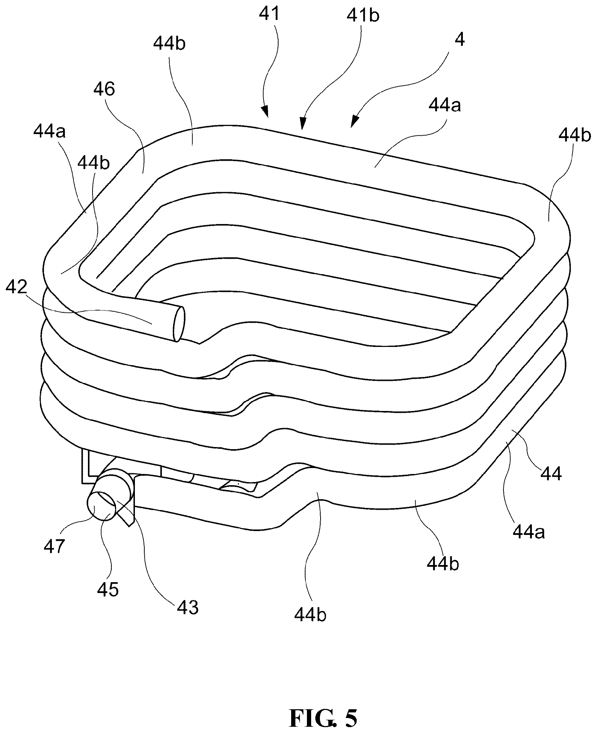

FIG. 5 is a three-dimensional diagram illustrating a structure of a tank 4 in the same modified example; and
FIG. 6 is a schematic longitudinal sectional view illustrating configuration of a tank 4 in the same modified example.

### DETAILED DESCRIPTION

An embodiment of the present invention is described in detail below based on drawings.

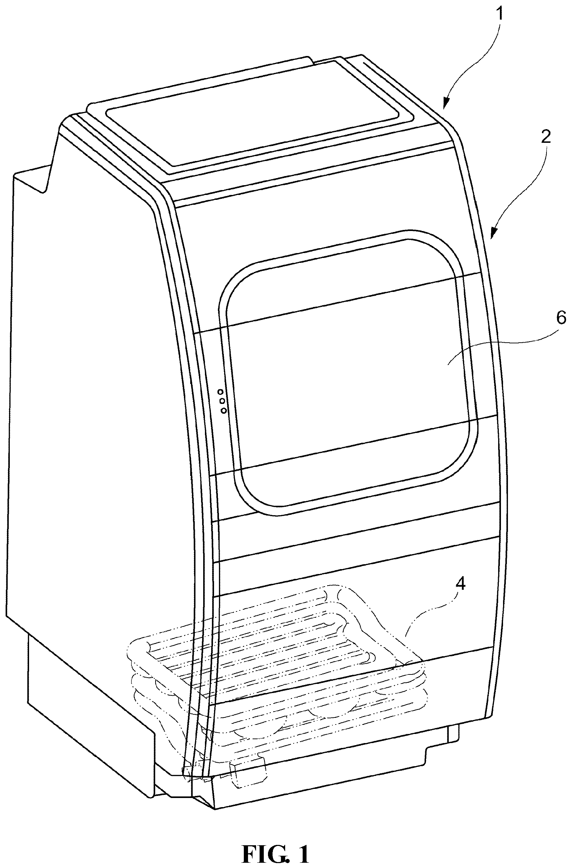

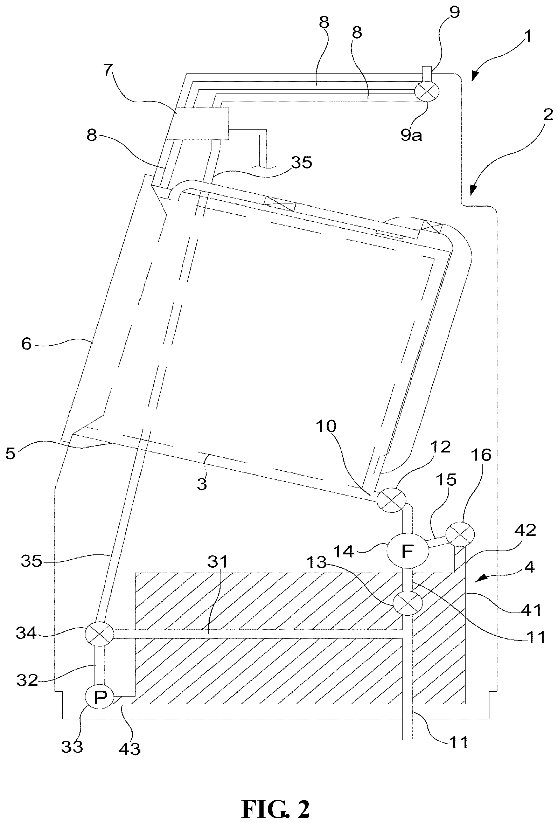

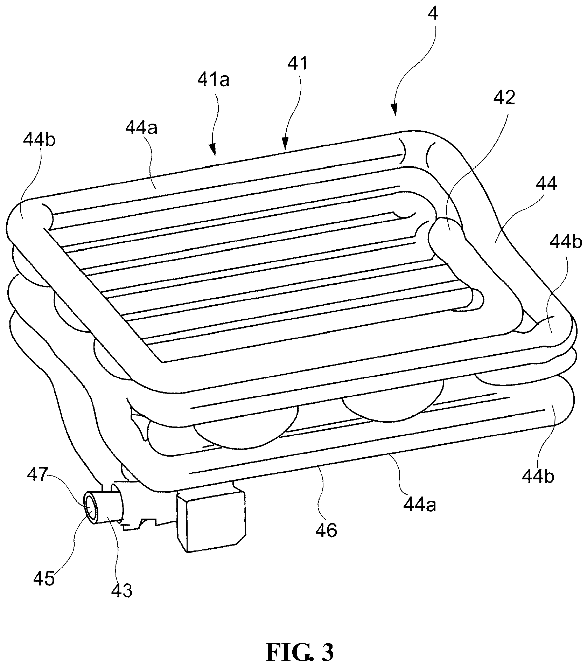

FIG. 1 is a three-dimensional diagram illustrating a washing machine 1 in an embodiment of the present invention, and is a diagram observed from an oblique upper side. In the same diagram, a water storage tank (i.e., a tank 4) configured in a housing 2 in the present embodiment is exemplarily shown with virtual lines. FIG. 2 is a general side sectional view illustrating a section when a washing machine 1 in an embodiment of the present invention is split along a vertical surface of a forward-backward direction observed from a right side. In the same diagram, for convenience, a shape of the tank 4 is shown in a manner of exemplarily adding shadow lines to the appearance merely. FIG. 3 is a three-dimensional diagram illustrating a specific shape of the tank 4.

The washing machine 1 mainly includes: a housing 2 that forms a shell; an outer drum 5 and a drum 3 that form a washing drum configured in the housing 2; and a water storage tank (i.e., a tank 4) of the present invention configured below the outer drum 5.

The tank 4 includes: a tank body 41 that forms an appearance of the tank 4, a water injecting port 42 which is continuous to the outer drum 5, and a water outtake port 43. Water, discharged from the outer drum 5, as washing drum drainage water is guided to the water outtake port 43. The water stored from the water outtake port 43 into the tank body 41 is discharged from the water outtake port 43 or is returned to the outer drum 5 that forms the washing drum. A specific structure of the tank 4 will be described in detail below.

A structure related to flow of the water in the washing machine 1 is described below with reference to FIG. 2.

A water supply port 9 is formed in an upper surface of the housing 2. The water supply port 9 is connected with water supply device, such as a tap water pipe. A door 6 is arranged on an upper side of a center portion of a front surface of the housing 2.

A water supply pipe 8 configured in the housing 2 is connected with the water supply port 9 on the upper surface of the housing 2 via a water supply valve 9a. The other end of the water supply pipe 8 opposite to the one end of the water supply pipe 8 connected to the water supply port 9 is connected to an uppermost part of a circumferential wall of the outer drum 5. The water supply port 9 is communicated with an interior of the outer drum 5 via the water supply pipe 8. An accommodating portion 7 is configured in a middle portion of the water supply pipe 8. The water supply pipe 8 branches into two water supply pipes through the water supply valve 9a and joins at the accommodating portion 7. Moreover, the water supply pipe 8 that extends out of the accommodating portion 7 is continuous to the upper part of the outer drum 5. In addition, a drum 3 as a washing drum/dewatering drum is configured on a center portion of the housing 2.

The drum 3 has a cylindrical shape, and is coaxially accommodated in the cylindrical outer drum 5. In the present embodiment, the drum 3 and the outer drum 5 constitute the washing drum to form a so-called oblique drum arrangement structure in which the front of the drum 3 faces obliquely upward. Front end surfaces of the drum 3 and the outer drum 5 are open and are blocked by the door 6. A motor not shown in the figure is arranged behind a rear end surface of the outer drum 5. The drum 3 is rotated through the motor (not shown in the figure) by taking a central axis of the drum 3 as a center.

A structure related to flow of the water that flows through the tank 4 in the present embodiment is described below.

A drainage port 10 opened towards a rear side is formed at a lowermost end portion of the outer drum 5, i.e., below a rear end surface. A drainage valve 12 is installed on the rear side of the drainage port 10. Moreover, the drainage valve 12 is connected with a drainage pipe 11 that extends downward, and a filter 14 and a second switching valve 13 are inserted into a middle of the drainage pipe 11 in sequence.

Besides the drainage pipe 11, the filter 14 is also connected with a branch pipe 15. The other end of the branch pipe 15 opposite to the one end of the branch pipe 15is connected to a water injecting port 42 of the tank 4 via a water storing valve 16.

In another aspect, a water outtake port 43 of the tank 4 is connected to the outer drum 5 via a pump 33, a delivery pipe 32, a recycling valve 34, a recycling pipe 35 and the accommodating portion 7.

The recycling valve 34 is a three-way valve and is switched with the following manner: the water, discharged from the pump 33, which flows in from one direction is enabled to flow out towards any direction of two directions of the outer drum 5 side and the drainage pipe 11 side.

One side of the recycling valve 34 is connected to the recycling pipe 35. The other end of the recycling pipe 35 is connected to the water supply pipe 8 via the accommodating portion 7. In addition, the other side of the recycling valve 34 is connected to a tank drainage pipe 31. The tank drainage pipe 31 of the tank is connected to the drainage pipe 11.

That is, in order to guide the water in the outer drum 5 into the tank 4, the drainage valve 12 is set to be "open", the second switching valve 13 is set to be "closed" and the water storing valve 16 is set to be "open". In another aspect, the drainage valve 12 and the second switching valve 13 are set to be "open", so as to discharge the water in the outer drum 5 out of the housing 2.

In addition, according to a structure of the above washing machine 1, in order to store the water in the tank 4 into the outer drum 5 for washing again, the water drawn by the pump 33 is delivered from the recycling pipe 35 to the accommodating portion 7 and the water supply pipe 8 by switching the recycling valve 34. In another aspect, in order to discharge the water in the tank 4 out of the machine, the water drawn by the pump 33 is delivered from the drainage pipe 31 of the tank to the drainage pipe 11 by switching the recycling valve 34.

Herein, as shown in FIG. 3, the tank 4 as water storage tank in the present embodiment includes: a tank body 41 configured in the housing 2 of the washing machine 1 and having a water flowing portion 45 which is internally formed into a tubular shape and constitutes a continuous flow path surface 47 and an external surface portion 44 that constitutes a flexible external surface 41a; a water injecting port 42 arranged at one end of the tank body 41 and configured to inject washing drum drainage water discharged from the washing drum to the tank body 41; and a water outtake port 43 arranged at another end of the tank body 41 and capable of recirculating the water injected into the tank body 41 into the washing drum. It should be indicated that, since specific shapes of the water injecting port 42 and the water outtake port 43 can be properly changed according to a structure connected with the tank 4 in the washing machine 1, specific description for the shapes is omitted.

As shown in the same figure, the tank body 41 is formed into a roughly hose shape, and for example, is made of transparent or euphotic resin material formed into a roughly tubular shape. The tank body 41 is made of transparent or euphotic resin material so that a water accumulating condition, existence of dirt and the like can be easily confirmed from an outer side during maintenance; and moreover, when an ultraviolet radiation apparatus not shown in the figure is arranged in the housing 2, ultraviolet rays are radiated to the tank body 41 so as to sterilize the water in the tank body 41. The tank body 41 has the external surface 41a formed into a roughly plate shape. Thus, the drum 3 is configured in the housing 2 along an oblique direction in such a manner that an upper surface side faces to a lower surface side of the drum 3 while the lower surface side is loaded on a bottom surface of the housing 2, so as to effectively utilize naturally-formed four corners for configuration. In addition, the external surface 41a of the tank body 41 is configured to have flexibility, and thus can be properly bent in the housing 2 relative to other contact positions for configuration, so that it benefit for further effectively utilizing the space. In addition, through such flexibility, the following advantage is also achieved: even if other objects are collided due to vibration generated in operation, it is difficult to generate unnecessary noise.

In order to constitute the external surface 41a of the tank body 41, the appearance of the external surface portion 44 is formed into a linear shape and the external surface portion 44 has a linear surface 46 formed into a roughly cylindrical external surface shape throughout the entire region. The external surface portion 44 has: a linear region 44a in which a linear portion is configured into a linear shape in a lengthwise direction; and a bent region 44b which is bent in a proper curvature. Thus, as mentioned above, the above external surface 41a is formed in such a manner that the appearance of the tank body 41 is formed into a roughly plate shape.

In the present embodiment, the water flowing portion 45 is composed of a flow path surface 47 arranged on an internal surface of the external surface portion 44 and formed into a round tubular inner surface shape. A diameter of the water flowing portion 45 can be properly set according to a thickness of a material for making the tank body 41, but is ideally set in such a manner that a water flow that flows in from the water injecting port 42 and a water flow that flows outwards under an effect of the pump 33 are not hindered excessively. Therefore, as an example, the diameter is set to be close to diameters of other pipelines configured outside the tank 4. In addition, the flow path surface 47 formed on the water flowing portion 45 is formed in such a manner that the water outtake port 43 is formed in a position lower than the water injecting port 42, and the tank body 41 is properly bent and keeps a certain downward inclination, so that the water injected from the water injecting port 42 can naturally flow through the water flowing portion 45 continuously and without stagnation by gravity.

That is, according to the above structure, specifically, through the operation of valves 12, 13, 15 and 34 and the pump 33, when the water flow is generated in the tank body 41, the water rapidly flows on the flow path surface 47. Thus, a roughly entire region of the surface of the flow path surface 47 is exposed in the water flow without omission, so that the dirt is difficult to attach. In addition, even if the dirt and the like are attached to the flow path surface 47, the dirt and the like can be washed away rapidly through such water flow.

As mentioned above, the tank 4 as the water storage tank for the washing machine 1 in the present embodiment includes the tank body 41. The tank body 41 is configured in the housing 2, and includes: the water flowing portion 45 which is internally formed into a tubular shape and constitutes the continuous flow path surface 47; and an external surface portion 44 that constitutes external surface 41a having flexibility.

According to such structure, the water flowing portion 45 of the tank body 41 is formed into the tubular shape and has the continuous flow path surface 47, so that when the water, as the washing drum drainage water, from the washing drum flows through, the water rapidly flows through on the flow path surface 47. As a result, the dirt is difficult to accumulate on the flow path surface 47, and besides, the dirt attached to the flow path surface 47 can be washed away through the flow of the water. As a result, a probability of performing difficult and complicated maintenance operation such as washing of the dirt and the like in the tank body 41 can be effectively reduced.

In addition, according to the present embodiment, since the external surface 41a of the tank body 41 is flexible and deformable, the external surface 41a can be properly deformed in the housing 2 of the washing machine 1, so as to effectively utilize an idle space without interfering with the configuration of other mechanism components not shown. That is, according to the present embodiment, it is easier to ensure the space used for configuring the tank body 41 in the housing 2, and a necessity of unnecessarily enlarging the housing 2 can be effectively eliminated.

In addition, according to the present embodiment, the tank body 41 with a roughly hose shape is formed in such a manner that the external surface portion 44 is formed into a linear shape having flexibility and the water flowing portion 45 includes the flow path surface 47 arranged on the internal surface of the external surface portion 44 and formed into a tubular shape. Thus, the appearance of the tank body 41 can be properly deformed according to other shapes of an interior of the housing 2 and configuration of mechanism components, so as to more effectively utilize the space in the housing 2. In addition, since the water flows through the tubular flow path surface 47, a bad condition of generating a position in which the water is retained in the tank body 41 can be effectively avoided.

Moreover, since the appearance of the tank body 41 is formed into a roughly plate shape, a gap formed along the internal surface of the housing 2 can be effectively used and a space formed in the housing 2 of the washing machine 1 with a so-called oblique drum arrangement structure can be effectively used.

### (Modified example)

A modified example of above embodiments is described below. In the modified example, elements equivalent to constituent elements of above embodiments are given same reference numerals, and the detailed description thereof will be omitted.

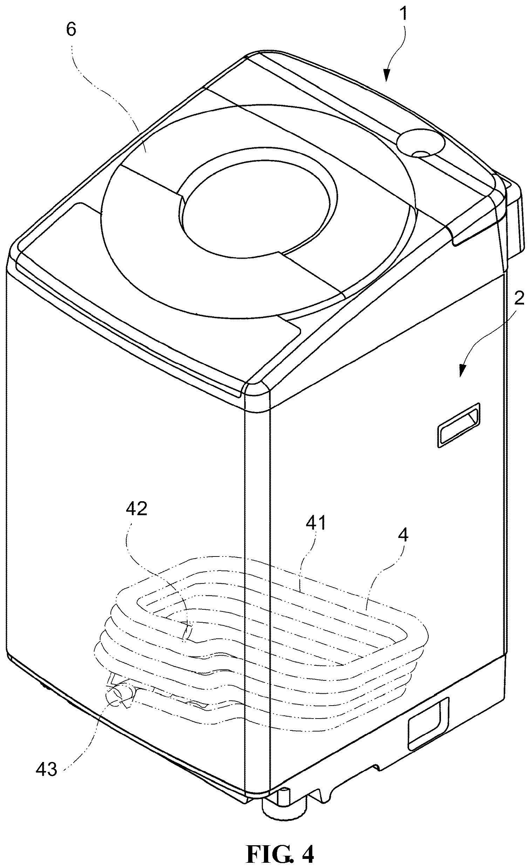

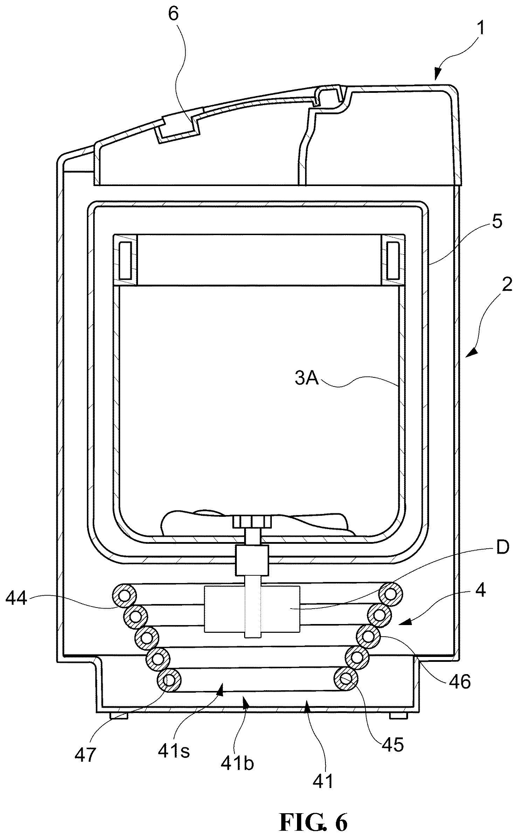

As shown in Fig. 4 and Fig. 6, the washing machine 1 in the modified example is formed in such a shape that the outer drum 5 is opened upward and a door 6 is arranged on the upper surface of the housing 2, and is called as a so-called vertical-type washing machine 1 that includes an inner drum 3A coaxially configured in the outer drum 5. It should be noted that, since the structures related to the flow of the water in the washing machine 1 is the same as that in above embodiments, specific figure and description are omitted in this modified example.

Moreover, as shown in Fig. 6, the washing machine 1 is provided with a driving mechanism D that takes a motor as a main body below the outer drum 5 in a manner of protruding downward.

Moreover, for the tank 4 as the water storage tank in the modified example, except the appearance of the tank body 41, the basic structure is same. That is, the tank 4 also includes a water injecting port 42 and a water outtake port 43; and the tank body 41 is formed into a roughly hose shape made of transparent or euphotic resin material formed into a roughly tubular shape, which is also the same as that in above embodiments. In addition, the following two aspects are also same: the water outtake port 43 is formed in a position lower than the water injecting port 42, and the tank body 41 is properly bent and keeps a certain downward slope.

Herein, the appearance of the tank body 41 of the tank 4 in the modified example is formed into an annular external surface 41b with a roughly annular shape having a mechanism arrangement space 41s at the center of the roughly annular shape. In other words, configurations of the linear region 44a and the bent region 44b that constitute the external surface portion 44 are different from those in above embodiments, thereby forming the annular external surface 41b. Thus, especially as shown in Fig. 6, the tank 4 in the modified example is configured in the housing 2 in such a manner that the driving mechanism is accommodated in the mechanism arrangement space 41s. It should be noted that, although the annular external surface 41b is shown in the same figure in such a manner that the appearance of the tank body 41 is a roughly bowl-shaped appearance, the following condition is schematically shown: the tank body 41 can be properly deformed according to the shape of the internal surface of the housing 2 through the flexibility of the material of forming the tank body 41.

Through adoption of the above structure, since the tank 4 in the modified example is formed into a roughly annular shape having the mechanism arrangement space 41s at the center of the roughly annular shape, even if a position of enabling the mechanism component in the housing 2 to protrude exists, a structure of a space at the periphery of the position can be effectively used.

That is, as shown in above embodiments and the modified example, the tank 4 of the present invention can be well applied to the washing machines 1 formed into various shapes regardless of orientations and shapes of the washing drum.

An embodiment of the present invention is described above, but the structure of the present embodiment is not limited to the above structure and can be varied in any modes.

For example, in above embodiments, the entire structure of the tank body having flexibility is disclosed. Of course, as long as such a structure that the appearance of the tank body is flexible and deformable is adopted, for example, the following solution can also be adopted: inflexible material is applied in a position, not forming the appearance, on the tank body.

In addition, although above embodiments and the modified example disclose that the water flowing portion is a structure which is formed by one flow path surface on the whole, undoubtedly, a water flowing portion with a flow path surface partially merged or branched can also be formed.

Moreover, although above embodiments and the modified example disclose the solution that the tank body is formed in a manner of properly bending in advance, undoubtedly, the tank body can also be formed in the following manner: flexible tubular material which is not formed into a curved shape is properly bent through a separated frame, so that the tank body forms a required appearance.

Various modifications can be made to other structures without departing from the scope of the technical spirit of the present invention.

### List of reference numerals

1: washing machine; 2: housing; 4: water storage tank; 41: tank body; 41s: mechanism configuring space; 42: water injecting port; 43: water outtake port; 44: external surface portion; 45: water flowing portion; 3: washing drum (drum); and 5: washing drum (outer drum).

## Claims

1. A water storage tank for a washing machine, comprising:
a tank body configured in a housing of the washing machine, and having a water flowing portion which is internally formed into a tubular shape and constitutes a continuous flow path surface and an external surface portion that constitutes a flexible external surface;
a water injecting port arranged at one end of the tank body and configured to inject washing drum drainage water discharged from a washing drum to the tank body; and
a water outtake port arranged at another end of the tank body and capable of recirculating the washing drum drainage water injected into the tank body into the washing drum.

2. The water storage tank for the washing machine according to claim 1, wherein
the external surface portion is formed into a linear shape having flexibility; and
wherein the water flowing portion comprises the flow path surface arranged on an internal surface of the external surface portion and formed into a tubular shape.

3. The water storage tank for the washing machine according to claim 1 or 2, wherein
a profile of the tank body is formed into a roughly plate shape.

4. The water storage tank for the washing machine according to claim 1 or 2, wherein
a profile of the tank body is formed into a roughly annular shape in which a mechanism arrangement space is formed at a center of the roughly annular shape.

5. A washing machine, comprising the water storage tank for the washing machine according to claim 1 or 2.
